# EUROPÄISCHE PATENTSCHRIFT

(11) **EP 0 818 227 B1**
(45) Veröffentlichungstag und Bekanntmachung des Hinweises auf die Patenterteilung: **24.04.2002**
(21) Anmeldenummer: 96810462.0
(22) Anmeldetag: 12.07.1996
(51) Int. Cl.: B01D 25/02, B01D 29/01, B01D 35/02, G21D 1/04

(54) **Saugsieb zum Abschirmen einer Eintrittsöffnung einer Saugleitung einer Pumpe**
Suction strainer for shielding an inlet opening of pump suction conduit
Tamis d'aspiration pour protéger l'ouverture d'entrée d'un conduit d'aspiration d'une pompe

(43) Veröffentlichungstag der Anmeldung: 14.01.1998
(73) Patentinhaber: CCI AG, 8404 Winterthur (CH)
(72) Erfinder: Kielbowicz, Stanislaw, CH-8820 Wädenswil (CH)
(74) Vertreter: Kluthe, Stefan, Dr.

(56) Entgegenhaltungen:
- WO-A-94/14166
- DE-A- 3 340 952
- FR-A- 2 684 311

## Beschreibung

Die Erfindung betrifft ein Saugsieb entsprechend dem Oberbegriff des Patentanspruchs 1.

Durch ein in jedem Kernkraftwerk vorhandenes Notkühlsystem muss gewährleistet werden, dass in einem Notfall der Kernreaktor intensiv durch Wasser gekühlt wird, welches in einem werkeigenen Wasserreservoir ständig verfügbar gehalten und im Notfall in einem Notkühlkreislauf über den Kernreaktor umgewälzt wird. Um einen einwandfreien Betrieb der Pumpen des Notkühlsystems zu gewährleisten, sind die Ansaugstellen der Notkühlleitungen mit Saugsieben der genannten Art versehen, durch welche allfällige, im Wasser befindliche Gegenstände und Materialien, die in einer Notfallsituation in das Notkühl-Wasserreservoir geraten könnten, zurückgehalten werden, um deren Eindringen in die Saugleitung und weiter zu den Pumpen zu verhindern. Derartige Materialien, z.B. in Wasser schwebende Fasern von Mineralwolle, die etwa aus einer beschädigten Isolation einer Rohrleitung stammen können, sammeln sich beim Einschalten des Notkühlsystems an der Oberfläche der Saugsiebe. Um einen einwandfreien Betrieb der Pumpen des Notkühlkreislaufs auch bei in beschriebener Weise belegten Saugsiebflächen zu gewährleisten, sollen die Saugsiebe je eine möglichst grosse wirksame Saugfläche aufweisen, damit die Strömungsgeschwindigkeit des diese Saugflächen durchsetzenden Wassers entsprechend reduziert werden kann. Zugleich sollen die Saugsiebe je mit einem begrenzten Volumen ausgeführt sein, damit die hohen hydrodynamischen Belastungen, die proportional zum Saugsiebvolumen sind, die zulässigen Beanspruchungen im Anschlussbereich der Saugleitung nicht übersteigen. Ein entsprechend diesen Anforderungen ausgeführtes Saugsieb der eingangs genannten Art ist in der Druckschrift "Nuclear Engineering International", February 1996 (Seite 24) beschrieben.

Der Erfindung liegt die Aufgabe zugrunde, ein insbesondere in dieser Hinsicht weiter entwickeltes Saugsieb der eingangs genannten Art in einer kompakten Bauweise zu schaffen, welche gegenüber bisherigen Ausführungen eine weitere Verbesserung des Verhältnisses zwischen der wirksamen Saugsiebfläche und dem Volumen des Siebkörpers ermöglicht und welche auf einfache Weise eine Anpassung der Abmessungen des Siebkörpers an unterschiedliche Vorgaben für die Auslegung des Saugsiebes gestattet.

Diese Aufgabe wird erfindungsgemäss durch die im kennzeichnenden Teil des Anspruchs 1 gelöst.

Die erfindungsgemässe Ausbildung des Saugsiebes ermöglicht eine Ausführung, welche, bei einem gegebenen Volumen des Siebkörpers, eine gegenüber bisherigen Ausführungen wesentlich vergrösserte, wirksame Saugsiebfläche aufweist. Entsprechend kann die Strömungsgeschwindigkeit des die Saugfläche durchsetzenden Kühlwassers auf einen vorteilhaft kleinen Wert reduziert werden, so dass die die Saugsiebflächen belegenden Materialien nur einen relativ geringen Durchflusswiderstand verursachen und damit kein nennenswerter Druckabfall über dem Saugsieb entstehen kann. Dies wird insbesondere erreicht durch die in den Kassetteneinheiten ausgebildeten, radial gerichteten und in allen Richtungen durchströmbaren Siebtaschen, deren Wandungen in der Abwicklung eine vorteilhaft grosse durchströmbare Fläche ergeben. Durch einerseits zwischen den Kassetteneinheiten und andererseits zwischen den Siebtaschen gebildete, und damit nicht verstopfbare Abflussspalte wird das Wasser, das bereits die Belegungsschicht und die Saugsiebfläche durchströmt hat, in den zentralen Saugraum abgeführt.

Ausgestaltungen der Erfindung sind in den abhängigen Patentansprüchen angegeben.

Weitere Merkmale und Einzelheiten ergeben sich aus der folgenden Beschreibung eines in der Zeichnung schematisch dargestellten Ausführungsbeispiels nach der Erfindung. Es zeigen:
- Fig.1: ein erfindungsgemäss ausgebildetes Saugsieb in einer perspektivischen Darstellung,
- Fig.2: das Saugsieb nach Fig.1 in einem Längsschnitt,
- Fig.3: das Saugsieb in einem Querschnitt entsprechend der Linie III - III in Fig.2,
- Fig.4: eine Einzelheit IV aus der Fig.3 in einer grösseren Darstellung und
- Fig.5: eine Einzelheit aus der Fig.3 in einer grösseren Darstellung.

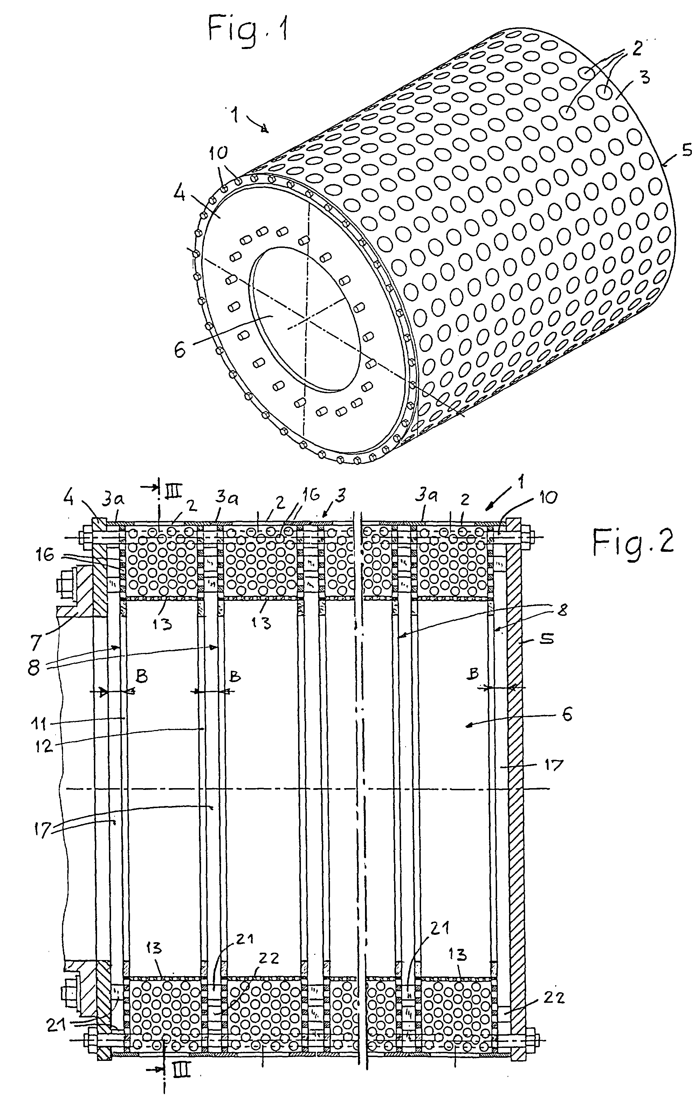

Das Saugsieb nach den Fig.1 bis 3 enthält einen zylindrischen Siebkörper 1, der von einer mit Durchtrittsöffnungen 2 versehenen Umfangswand 3 umgeben ist, und der am einen Ende durch eine Flanschpartie 4 und am anderen Ende durch eine Stirnwand 5 begrenzt ist. Der Siebkörper 1 umgibt einen zentralen Saugraum 6, der durch die Stirnwand 5 verschlossen und über die Flanschpartie 4 an eine Saugleitung 7 einer nicht dargestellten Pumpe, z.B. einer Kühlwasserpumpe eines Notkühlkreislaufs eines Kernkraftwerks, anschliessbar ist. Der Siebkörper 1 ist aus mehreren modularen, in axialer Richtung stapelbaren, scheibenförmigen Kassetteneinheiten 8 gebildet, welche gegeneinander abgestützt und durch Spannelemente, darstellungsgemäss Spannbolzen 10 zwischen dem Flanschteil 4 und der Stirnwand 5 eingespannt gehalten sind.

Die Kassetteneinheiten 8 enthalten je zwei in axialer Richtung beabstandete, ringscheibenförmige Seitenwandpartien 11 und 12 aus perforiertem Blech, welche durch mehrere, zwischen ihnen in Umfangsrichtung gegeneinander versetzt angeordnete Einbauteile in Form von Wandsegmenten 13 miteinander verbunden sind. Die Wandsegmente 13 sind durch U-förmig gebogene, perforierte Blechteile gebildet, welche mit den Seitenwandpartien 11 und 12 im wesentlichen radial verlaufende, gegen den äusseren Umfang des Siebkörpers 1 offene Siebtaschen 14 bilden. Die Siebtaschen 14 sind je in einem Abstand A von der benachbarten Siebtasche 14 angeordnet, wobei die einander benachbarten Wandsegmente 13 mit den Seitenwandpartien 11 und 12 und mit einem sie überdeckenden Abschnitt der Umfangswand 3 einen in axialer Richtung verlaufenden Abflussspalt 15 begrenzen, der im wesentlichen radial in den zentralen Saugraum 6 mündet.

Die Seitenwandpartien 11 und 12 können je auf der ganzen Kreisringfläche mit einer Perforierung versehen sein, oder, wie beim dargestellten Beispiel, nur im Bereich der Siebtaschen 14 mit Durchtrittsöffnungen 16 versehen sein, so dass die zwischen den Wandsegmenten 13 gebildeten Abflussspalte 15 durch von Durchtrittsöffnungen freie Abschnitte der Seitenwandpartien 11 und 12 begrenzt sind. Die Kassetteneinheiten 8 sind je in einem axialen Abstand B von der benachbarten Kassetteneinheit 8 bzw. von der Flanschpartie 4 und der Stirnwand 5 angeordnet, wobei die einander benachbarten Seitenwandpartien 11 und 12 mit einem sie überdeckenden Abschnitt der Umfangswand 3 jeweils einen in Umfangsrichtung verlaufenden, ringförmigen Abflussspalt 17 begrenzen, der ebenfalls in den zentralen Saugraum 6 mündet. Wie insbesondere aus den Fig.2, 3 und 4 hervorgeht, sind die in der Umfangswand 3 ausgebildeten Durchtrittsöffnungen 2 jeweils im Bereich der Siebtaschen 14 angeordnet und so bemessen, dass sie sich je zumindest über den grössten Teil des Querschnitts jeder Siebtasche 14 erstrecken und damit deren freie Durchströmung gewährleisten.

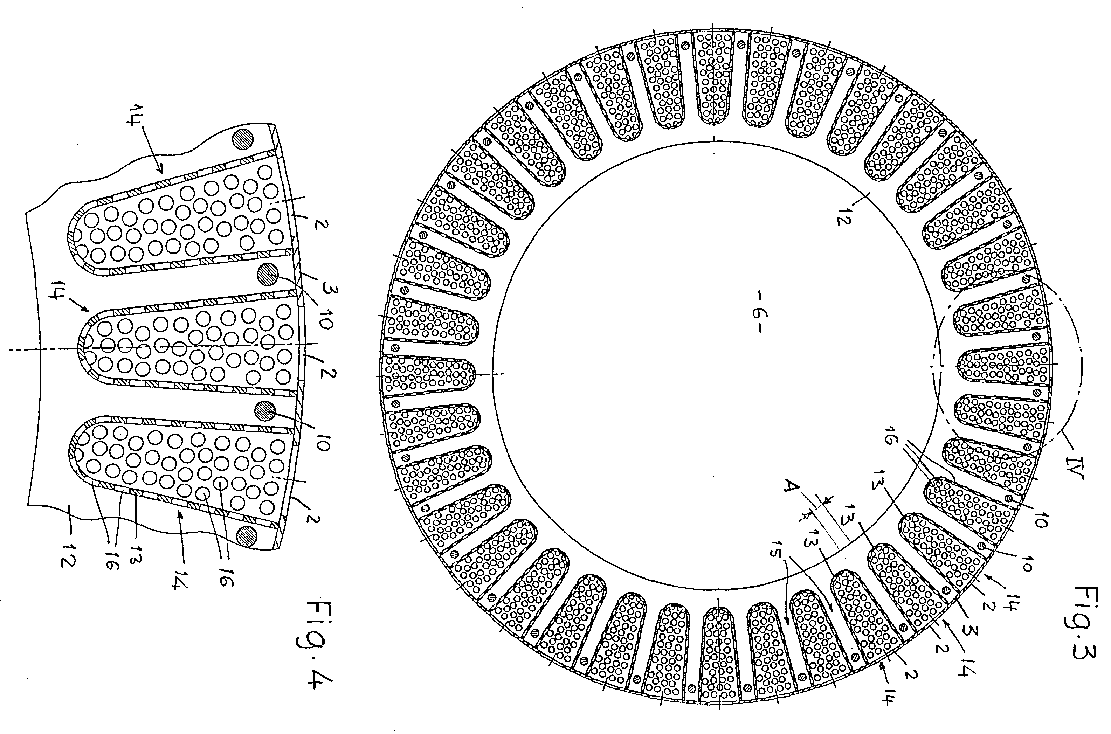

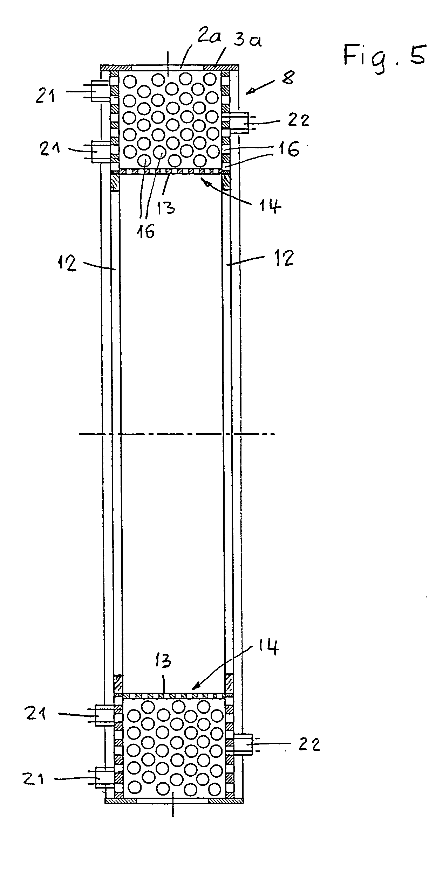

Die Umfangswand 3 kann aus einem entsprechend gelochten Blech gefertigt und, wie in Fig.1 dargestellt, als einstückiger, rohrförmiger Mantel ausgeführt sein, der sich über alle Kassetteneinheiten 8 erstreckt, und der mit seinen Enden je gegen den Flanschteil 4 bzw. die Stirnwand 5 dichtend abgestützt ist. Entsprechend der Darstellung nach den Fig.2 und 5 kann die Umfangswand 3 auch aus einzelnen, über die Spannschrauben 10 gegeneinander verspannbaren Rohrabschnitten 3a zusammengesetzt sein, welche je eines der Kassettenelemente 8 umgeben und mit dessen Seitenwänden 11 und 12 verbunden sind. Wie insbesondere aus der Fig.2 hervorgeht, sind der Flanschteil 4 und die Stirnwand 5 als von durchströmbaren Durchtrittsöffnungen freie Abdeckungen ausgeführt, welche mit den benachbarten Stirnwandpartien 11 bzw. 12 die ringförmigen Abflussspalte 17 begrenzen.

Die ringförmigen Abflusskanäle 17 sind durch je zwischen den einander zugewandten Seitenwandpartien 11 und 12 der einander benachbarten Kassetteneinheiten 8 angeordnete Distanzstücke 21 und 22 bestimmt, welche je von der einen Stirnwandpartie 11 bzw. 12 gegen die benachbarte Stirnwandpartie 12 bzw. 11 vorstehen. Die Distanzstücke 21, 22 können durch an den Seitenwandpartien befestigbare Stützteile, oder, wie in Fig.5 angedeutet, durch örtlich vorstehende, je eine der Seitenwandpartien 11 bzw. 12 durchsetzende Abschnitte der Wandsegmente 13 gebildet sein, welche je eine in der betreffenden Seitenwandpartie 11 bzw. 12 vorgesehene, nicht dargestellte Durchtrittsöffnung durchsetzen.

Durch die erfindungsgemässe Ausbildung des Saugsiebes ist, wie eingangs beschrieben, ein besonders günstiges Verhältnis zwischen dem Volumen des Saugsiebes und der wirksamen Saugfläche erzielbar, indem durch die nach aussen offenen Siebtaschen 14 einzeln durchströmbare Teilvolumina gebildet werden, aus denen das durch die Durchtrittsöffnungen 2 der Umfangswand 3 angesaugte Wasser durch die in allen Richtungen frei durchströmbaren Wandungen der Siebtaschen 14 austreten und durch die Abflussspalte 15 und 17 in den zentralen Saugraum 6 abfliessen kann. Die Aufteilung des gesamten Volumens des Siebkörpers in einzeln absaugbare Teilvolumina ergibt somit eine optimale Ausnutzung des Saugsiebvolumens, wodurch die Geschwindigkeit des die Saugflächen durchströmenden Wassers auf entsprechend geringe Werte reduziert wird. Die erfindungsgemässe Ausführung ermöglicht zudem eine besonders effiziente Rückspülung des Saugsiebes, wobei durch Umkehren der Umwälzrichtung des Wasserstromes die an den Saugsiebflächen gesammelten Materialien von der Siebfläche entfernt und beschleunigt abgeführt werden können. Um eine effiziente Entfernung der Belegungsschicht zu gewährleisten, sind relativ grosse Strömungsgeschwindigkeiten des die Saugsiebflächen in der Rückspülrichtung durchsetzenden Wassers erforderlich. Diese Forderung, welche der für den Ansaugvorgang angestrebten Minimierung des Druckabfalls entgegensteht, wird beim erfindungsgemäss ausgebildeten Saugsieb dadurch erfüllt, dass beim Rückspülvorgang die rückspülbare Saugfläche im wesentlichen auf die radialen Saugtaschen 14 begrenzt ist, da die äusseren Saugsiebflächen, mit Ausnahme der den Siebtaschen 14 zugeordneten Durchtrittsöffnungen 2 der Umfangswand 3, als nicht durchströmbare Abdeckflächen ausgelegt sind. Entsprechend lässt sich die Rückspülgeschwindigkeit wesentlich steigern, da der ganze Rückspülstrom nur durch die den Siebtaschen 14 zugeordneten Durchtrittsöffnungen 2 aus dem Siebkörper 1 austreten kann. Entsprechend werden die in den radialen Siebtaschen 14 eingelagerten Materialien mit relativ hoher Geschwindigkeit aus den Durchtrittsöffnungen 2 hinausgeschleudert und können vom Saugsieb entfernt auf dem Boden des Wasserreservoirs sedimentieren.

Die modularen Kassetteneinheiten 8 können mit unterschiedlichen oder, wie dargestellt, gleichen Breitenabmessungen ausgeführt sein, wobei eine der jeweiligen Auslegung entsprechende Anzahl Kassettenelemente 8 durch die Spannschrauben 10 oder durch beliebig andere Spannelemente zu einem kompakten Siebkörper 1 zusammengesetzt werden.

Das zuvor beschriebene Ausführungsbeispiel lässt sich wie folgt zusammenfassen:

Das Saugsieb enthält einen zylindrischen Siebkörper aus mehreren modularen, in axialen Abständen voneinander angeordneten, miteinander koppelbaren scheibenförmigen Kassettenelementen, welche einen zentralen Saugraum umgeben und welche zwischen einer den Saugraum abdeckenden Stirnwand und einer an eine Saugleitung einer Kühlwasserpumpe anschliessbaren Flanschpartie gegeneinander verspannt gehalten sind. Die Kassetteneinheiten sind je aus zwei ringscheibenförmigen, perforierten Seitenwandpartien und mehreren, zwischen diesen in Umfangsrichtung getrennt angeordneten, perforierten Wandsegmenten gebildet, welche mit den Seitenwandpartien im wesentlichen radial verlaufende, gegen den äusseren Umfang des Siebkörpers offene, in allen Richtungen durchströmbare Siebtaschen bilden. Zwischen den Siebtaschen und zwischen den Kassetteneinheiten sind Abflussspalte gebildet, welche im wesentlichen radial in den Saugraum münden und durch welche aus den Siebtaschen austretendes Wasser in den Saugraum abfliessen kann. Dadurch wird ein besonders günstiges Verhältnis zwischen dem Volumen des Siebkörpers und der für die Durchströmung wirksamen Saugfläche erzielt.

## Patentansprüche

1. Saugsieb zum Abschirmen einer Eintrittsöffnung einer Saugleitung (7) einer Pumpe, insbesondere einer Kühlwasserpumpe eines Notkühlsystems eines Kernkraftwerks, mit einem im wesentlichen zylindrischen Siebkörper (1), der einen an die Saugleitung (7) anschliessbaren zentralen Saugraum (6) enthält,
**dadurch gekennzeichnet, dass** der Siebkörper (1) aus mehreren modularen, in axialer Richtung stapelbaren und miteinander koppelbaren, ringscheibenförmigen Kassetteneinheiten (8) gebildet ist, welche je mehrere, in Umfangsrichtung getrennt angeordnete, im wesentlichen radial verlaufende und je gegen den äusseren Umfang des Siebkörpers (1) offene Siebtaschen (14) enthalten, und dass jede Siebtasche (14) auf allen Seiten von in den zentralen Saugraum (6) mündenden Abflussspalten (15 bzw. 17) umgeben ist.

2. Saugsieb nach Anspruch 1, **dadurch gekennzeichnet, dass** die Kassetteneinheiten (8) je in einem axialen Abstand (B) von der benachbarten Kassetteneinheit (8) angeordnet sind und je zwei in axialer Richtung beabstandete, ringscheibenförmige, perforierte Seitenwandpartien (11, 12) und mehrere, zwischen diesen in Abständen (A) voneinander angeordnete Einbauteile in Form von im wesentlichen U-förmig gebogenen, perforierten Wandsegmenten (13) enthalten, welche je mit den zugeordneten Abschnitten der Seitenwandpartien (11,12) eine der Siebtaschen (14) bilden, und dass die Abflussspalte (15 und 17) durch die je zwischen den Einbauteilen (13) bzw. die je zwischen den Seitenwandpartien (11, 12) bestehenden Abstände (A bzw. B) bestimmt sind.

3. Saugsieb nach Anspruch 1 oder 2, **gekennzeichnet durch** eine die Kassetteneinheiten (8) umgebende Umfangswand (3), die im Bereich jedes der Einbauteile (13) mindestens eine Durchtrittsöffnung (2) aufweist, **durch** welche die betreffende radiale Siebtasche (14) anströmbar ist.

4. Saugsieb nach einem der vorangehenden Ansprüche, **dadurch gekennzeichnet, dass** die Kassetteneinheiten (8) zwischen einem an die Saugleitung (7) anschliessbaren Flanschteil (4) und einer den zentralen Saugraum (6) abschliessenden Stirnwand (5) angeordnet und durch mehrere, zwischen dieser Stirnwand (5) und dem Flanschteil (4) sich erstreckende Spannelemente (10) gegeneinander verspannbar gehalten sind.

5. Saugsieb nach Anspruch 4, **dadurch gekennzeichnet, dass** die Stirnwand (5) und der Flanschteil (4) als von durchströmbaren Durchtrittsöffnungen freie Abdeckungen ausgeführt sind.

6. Saugsieb nach einem der vorangehenden Ansprüche, **dadurch gekennzeichnet, dass** der zwischen den Kassetteneinheiten (8) gebildete Abflussspalt (17) durch zwischen den Seitenwandpartien (11, 12) angeordnete Distanzstücke (18) bestimmt ist.

7. Saugsieb nach Anspruch 6, **dadurch gekennzeichnet, dass** die Distanzstücke (18) durch örtliche, über die Seitenwandpartien (11, 12) vorstehende Abschnitte der Einbauteile (13) gebildet sind und dass die Seitenwandpartien (11, 12) mit zur Aufnahme dieser Abschnitte bestimmten, von diesen Abschnitten durchsetzbaren Durchtrittsöffnungen ausgeführt sind.

## Claims

1. Suction screen for the screening of an inlet opening of a suction line (7) of a pump, in particular of a water coolant pump of an emergency cooling system of a nuclear power station, comprising a substantially cylindrical screen body (1) which contains a central suction space (6) connectable to the suction line (7),
**characterized in that** the screen body (1) is formed of a plurality of modular, ring disk-like cassette units (8) which can be stacked and coupled to one another in the axial direction and which each contain a plurality of separate, mutually offset, substantially radially extending screen pockets which are each open towards the outer periphery of the screen body (1) and are arranged in the circumferential direction, and **in that** each screen pocket (14) is surrounded on all sides by outflow gaps (15 and 17 respectively) which open into the central suction space (6).

2. Suction screen in accordance with claim 1, **characterized in that** the cassette units (8) are each arranged at an axial spacing (B) from the adjacent cassette unit (8) and each contain two ring disk-like, perforated sidewall portions (11, 12) spaced apart in the axial direction and a plurality of inbuilt parts in the form of perforated wall segments (13) which are bent into a substantially U-shaped form and disposed between the sidewall parts at spacings (A) from one another, which each form one of the screen pockets (14) together with the associated sections of the sidewall portions (11, 12) and **in that** the outflow gaps (15 and 17) are determined by spacings (A and B respectively) between the inbuilt parts (13) and between the sidewall parts (11, 12).

3. Suction screen in accordance with claim 1 or claim 2, **characterized by** a peripheral wall (3) which surrounds the cassette units (8) which has at least one passage opening (2) in the region of each of the inbuilt parts (13) through which flow can take place onto the relevant radial screen pocket (14).

4. Suction screen in accordance with one of the preceding claims, **characterized in that** the cassette units (8) are disposed between a flange part (4) which can be connected to the suction line (7) and an end wall (5) which closes off the central suction space (6) and can be held clamped together by a plurality of clamping elements (8) extending between this end wall (5) and the flange part (4).

5. Suction screen in accordance with claim 4, **characterized in that** the end wall (5) and the flange part (4) are executed as covers free of passage openings through which flow can take place.

6. Suction screen in accordance with one of the preceding claims, **characterized in that** the outflow gap (17) formed between the cassette units (8) is defined by spacers (18) arranged between the sidewall portions (11, 12).

7. Suction screen in accordance with claim 6, **characterized in that** the spacers (18) are formed by sections of the inbuilt parts (13) which project locally beyond the sidewall portions (11, 12) and **in that** the side wall portions (11, 12) are designed with passage openings intended to receive these sections through which these sections pass.

## Revendications

1. Tamis d'aspiration pour protéger une ouverture d'entrée d'un conduit d'aspiration (7) d'une pompe, notamment d'une pompe d'eau de refroidissement d'un système de refroidissement de secours d'une centrale nucléaire, avec un corps de tamisage (1) sensiblement cylindrique qui comprend une enceinte aspiration centrale (6) pouvant être raccordée au conduit d'aspiration (7), **caractérisé en ce que** le corps de tamisage (1) est constitué de plusieurs unités de cassettes modulaires (8) en forme de disque annulaire, empilables dans la direction axiale et pouvant être accouplées les unes ⁻ aux autres, qui comprennent chacune plusieurs poches de tamisage (14) disposées séparément dans la direction périphérique, s'étendant sensiblement radialement et ouvertes chacune vers le pourtour extérieur du corps de tamisage (1) et **en ce que** chaque poche de tamisage (14) est entourée sur tous les côtés de fentes d'écoulement (15 respectivement 17) débouchant dans l'enceinte d'aspiration centrale (6).

2. Tamis d'aspiration selon la revendication 1, **caractérisé en ce que** les unités de cassettes (8) sont disposées chacune à un écart axial (B) de l'unité de cassettes avoisinante (8) et comprennent chacune deux parties de paroi latérales perforées (11, 12) en forme de disque annulaire, espacées dans la direction axiale et plusieurs parties de montage disposées entre celles-ci à des écarts (A) les unes des autres sous la forme de segments de paroi (13) perforés, courbés sensiblement en forme de U qui forment chacune avec les tronçons associés des parties de paroi latérales (11, 12) l'une des poches de tamisage (14), et **en ce que** les fentes d'écoulement (15 et 17) sont définies par les écarts (A respectivement B) existant respectivement entre les parties de montage (13) respectivement entre les parties de paroi latérales (11, 12).

3. Tamis d'aspiration selon la revendication 1 ou 2, **caractérisé par** une paroi périphérique (3) entourant les unités de cassettes (8) qui présente au voisinage de chacune des parties de montage (13) au moins une ouverture de passage (2) par laquelle le flux peut être dirigé vers la poche de tamisage radiale concernée (14).

4. Tamis d'aspiration selon l'une des revendications précédentes, **caractérisé en ce que** les unités de cassettes (8) sont disposées entre une partie de bride (4) pouvant être raccordée au conduit d'aspiration (7) et une paroi frontale (5) fermant l'enceinte d'aspiration centrale (6) et sont maintenus en tension les uns contre les autres par plusieurs éléments tendeurs (10) s'étendant entre cette paroi frontale (5) et la partie de bride (4).

5. Tamis d'aspiration selon la revendication 4, **caractérisé en ce que** la paroi frontale (5) et la partie de bride (4) sont réalisées comme recouvrements exempts d'ouvertures de passage à écoulement.

6. Tamis d'aspiration selon l'une des revendications précédentes, **caractérisé en ce que** la fente d'écoulement (17) formée entre les unités de cassettes (8) est définie par des pièces d'écartement (18) disposées entre les parties de paroi latérales (11, 12).

7. Tamis d'aspiration selon la revendication 6, **caractérisé en ce que** les pièces d'écartement (18) sont formées par des tronçons locaux des parties de montage (13) faisant saillie sur les parties de paroi latérales (11, 12) et **en ce que** les parties de paroi latérales (11, 12) sont réalisées avec des ouvertures de passage destinées à recevoir ces tronçons, pouvant être traversées par ces tronçons.
